(19) **Europäisches Patentamt / European Patent Office / Office européen des brevets**

(11) **EP 4 756 259 A1**

(12) **EUROPEAN PATENT APPLICATION**

(43) Date of publication:
**10.06.2026 Bulletin 2026/24**

(21) Application number: **25219195.2**

(22) Date of filing: **27.11.2025**

(51) International Patent Classification (IPC):
**F16H 57/08** (2006.01) **F16H 1/28** (2006.01)
**E06B 11/00** (2006.01)

(52) Cooperative Patent Classification (CPC):
**F16H 1/28; E06B 11/00; F16H 57/082;**
F16H 2057/085

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.12.2024 GB 202417849**

(71) Applicant: **Integrated Design Limited
Feltham, Middlesex TW13 7EQ (GB)**

(72) Inventor: **Huff, Derek
Feltham, TW13 7EQ (GB)**

(74) Representative: **Dolleymores
9 Rickmansworth Road
Watford, Hertfordshire WD18 0JU (GB)**

(54) **A PLANETARY GEAR**

(57) A planetary gear comprising a sun gear, a plurality of planet gears, a carrier, and a ring gear, wherein: each planet gear has a longitudinal axis parallel to the central axis of the sun gear and comprises a first gear portion, a second gear portion, and an intermediate portion between the first and second gear portions along the longitudinal axis, each of said portions being centred on the longitudinal axis, and wherein each planet gear is a rigid body such that none of said portions of the planet gear is rotatable relative to any other of said portions of the planet gear;

the first gear portion of each planet gear engages with the sun gear;
the second gear portion of each planet gear engages with the ring gear and not with the sun gear; and
the carrier is arranged parallel to the sun gear and between the intermediate portions of each planet gear, the intermediate portion of each planet gear being located by the carrier so as to allow rotation of the planet gear about its longitudinal axis.

**Figure 1**

## Description

The present invention relates to planetary gears.

A planetary gear comprises a sun gear, a plurality of planet gears orbiting the sun gear, and a ring gear surrounding the planet gears. Each of said gears is rotatable about its own axis (the axis of rotation of each gear being parallel to the that of all the others), although one of the sun or the ring gear may be fixed against rotation, depending on the technical purpose and application of the planetary gear.

In a conventional planetary gear, the sun gear, planet gears and ring gear all lie in and engage with each other in the same plane. Each planet gear is fitted on a "stub shaft" which is fixed to a carrier plate which is parallel to the plane in which the gears lie.

In this conventional arrangement, the load of the planetary gear is cantilevered off the carrier plate. This can lead to high forces on the stub shafts which can cause deformation of the stub shafts, the carrier plate and the gears. There are alternative arrangements that attempt to resolve these problems wherein the free ends of the stub shafts (i.e., the ends not fixed to the carrier plate) are connected to each other for support and/or to a structure which can mechanically couple them to the carrier plate. However, such alternative arrangements are costly and can add complexity.

Typically, planet gears are formed by machining a rod of material many times the height of each gear and then parting (i.e., slicing) that rod into separate planet gears. A centre hole, into which a stub shaft is inserted, is drilled individually in each planet gear as a separate process, which is costly. Furthermore, a great deal of precision is needed in positioning the centre holes in the planet gears so that each planet gear can engage with the ring and sun gears without undesirable loads caused by less than perfect concentricity.

It is an object of the present invention to provide an improved planetary gear.

The present invention also relates to access control systems for preventing or restricting the movement of people through a passageway.

Access control systems are commonly used to control the passage of people into and/or out of buildings or other restricted environments. Typically, such systems will be deployed within a passageway through which people must pass and will commonly comprise a barrier which extends across the passageway to block the passageway, such that a person cannot pass through the passageway unless and until the barrier has been removed. The barrier may be of any form such as an arm, a panel or a door.

It is common for the movement of such barriers to be controlled by means of a rotatable shaft to which the barrier is attached, such that rotation of the shaft causes concurrent movement of the barrier out of the passageway in order to permit access. The shaft is subsequently rotated in the reverse direction to move the barrier back into its original position extending across the passageway. It is important that a brake is used to prevent rotation of the shaft when the barrier is deployed, in order to prevent the barrier from being forced open by an unauthorised person. Typically, electromagnetic brakes are used which comprise a moving magnetic component referred to as an armature, which, when drawn by a magnetic force to engage with a corresponding surface of an electromagnet, provides braking torque to an attached torque load.

GB2604906B discloses an access control system such as a speed gate which utilises a conventional planetary gear as part of an electromagnetic brake assembly. The invention disclosed therein arose out of a need to provide an access control system which provides a high braking force to the barrier to prevent forced opening of the barrier, whilst minimising the footprint and space envelope of the brake component. The invention disclosed therein further provided an access control system which has quieter operation, lower power consumption, higher braking torque and easy setting and adjustment of the brake gap than access control systems comprising a conventional electromagnetic brake without a planetary gear.

The torque applied to the shaft when the barrier is forced will depend on the magnitude of the force and the perpendicular distance between the rotational axis of the shaft and the point on the barrier at which the force is applied, meaning that the torque of the shaft can be significant. Accordingly, the braking torque required of the brake to prevent the barrier from being forced open must also be significant. However, as mentioned above, high forces on the stub shafts in a conventional planetary gear can cause deformation of the stub shafts, the carrier plate and the gears.

It is a further object of the present invention to provide an improved access control system.

According to the present invention in a first aspect, there is provided a planetary gear comprising a sun gear, a plurality of planet gears, a carrier, and a ring gear, wherein: each planet gear has a longitudinal axis parallel to the central axis of the sun gear and comprises a first gear portion, a second gear portion, and an intermediate portion between the first and second gear portions along the longitudinal axis, each of said portions being centred on the longitudinal axis, and wherein each planet gear is a rigid body such that none of said portions of the planet gear is rotatable relative to any other of said portions of the planet gear; the first gear portion of each planet gear engages with the sun gear; the second gear portion of each planet gear engages with the ring gear and not with the sun gear; the carrier is arranged parallel to the sun gear and between the intermediate portions of each planet gear; the carrier comprises a plurality of slots along its outer edge; and the intermediate portion of each planet gear is a reduced diameter waist portion arranged to locate in one of said slots so as to attach the intermediate portion to the carrier and so as to allow rotation of the planet gear about its longitudinal axis.

In this arrangement, the sun gear engages with the first portions of the planet gears and the ring gear engages with the second portions of the planet gears so that the balance or 'fulcrum' of the forces is broadly where the carrier plate engages with the intermediate portions of the planet gears. This ensures the stability of the planet gears within the planetary gear even when the sun gear, ring gear and planet gears are not all in the same plane.

As the planet gears are not mounted on stub shafts which extend from the carrier, the load of the planetary gear is not cantilevered off the carrier, and the risk of high forces causing deformation of the carrier plate and the gears is greatly reduced.

The diameters of the first and second gear portions of each planet gear are constant along the longitudinal axis of that planet gear. The diameters of the first and second gear portions of that planet gear may be the same or may be different. However, the diameters of all the first gear portions must be the same, and similarly for the second gear portions.

The first gear portion, second gear portion and intermediate portion of a planet gear may have different lengths measured in a direction parallel to the longitudinal axis of that planet gear.

The intermediate portion of each planet gear is of smaller diameter than the maximum diameter of each of the first and second the gear portions of that planet gear, forming the waist.

The planet gears are located in the carrier plate by inserting the intermediate portion of each gear into one of the slots. The slots in the carrier may be generally U-shaped or sectors of a circle.

The ring gear at least partially holds the planet gears within the slots. This hold is most effective where the ring gear engages with both the first and second gear portions of the planet gears, as discussed below.

Preferably, the first gear portion of each planet gear also engages with the ring gear, such that the first gear portion of each planet gear is engaged between the sun gear and the ring gear in a direction perpendicular to the central axis of the sun gear.

As stated above, the fulcrum of the forces is broadly where the carrier plate engages with the intermediate portions of the planet gears, and the planet gears are therefore stable. Thus, there is little or no torque acting to rotate the planet gear such that its longitudinal axis is no longer parallel to the central axis of the sun gear.

Nonetheless, by having the ring gear also engage with the first portion of the planet gear, the possibility of any such torque causing any such rotation is eliminated, thus increasing the stability of the planetary gear.

Preferably, the diameters of each of the first and second gear portions of the planet gears are equal. This improves the balance between the force exerted by the sun gear on the first portion of a planet gear with the force exerted by the ring gear on the second portion of the planet gear. Furthermore, it ensures a simpler ring gear design where the ring gear also engages with the first portions of the planet gears.

Preferably, the maximum diameter of the intermediate portion of each planet gear is less than both the diameters of the first and second gear portions of said planet gear, and the diameters of the first and second gear portions of each planet gear are larger than the radial width of each respective slot, such that, when a planet gear is located by a slot, said planet gear is prevented from longitudinal removal from the slot.

By having an intermediate portion thinner than the first and second gear portions, forming a waist, the planet gears are constrained axially within their respective slots.

Preferably, the surface of the intermediate portion of each planet gear is smooth (e.g., cylindrical) so as to limit friction between the intermediate portion and the edge of the slot of the carrier in which the intermediate portion is located. This allows for smooth rotation of the planet gear about its longitudinal axis when the intermediate portion of the planet gear is located within the slot and in contact with the edge of the slot.

In this arrangement, the intermediate portion of each planet gear is a smooth bearing surface so as to facilitate the rotation of the intermediate portion within the slot.

Preferably, each planet gear is formed as one integral body.

Preferably, each planet gear has a hole passing through the planet gear, the hole extending along a direction parallel to the longitudinal axis of the planet gear, and the planetary gear further comprises a plurality of pins, each pin being inserted with a tight fit into, and filling substantially the entire length of, the hole of a different one of the planet gears. The hole of each planet gear may be 1.5 to 4.5 mm in diameter. Most preferably, the hole of each planet gear is between 2.5 and 3.5 mm in diameter. However, the hole of each planet gear could have a diameter outside of these ranges.

The shearing forces to which a planet gear is exposed in use has a shortening effect on the outer portions of the planet gear but not on the inner portions of the planet gear, causing the planet gear to eventually break. Thus, a hole through the planet gear increases the longevity of the planet gear as this discrepancy cannot arise (i.e., because there is no middle or inner portions of the planet gear). The pin through the hole in the planet gear ensures that the planet gear is still strong enough to withstand the side loads it has to bear as part of the planetary gear system.

The hole may typically be parallel to the longitudinal axis of the planet gear but may not necessarily be concentric with the first and second gear portions and the intermediate portion.

According to the present invention in a second aspect, there is provided an access control system for restricting access through a passageway, as recited in the following clauses.

Clause 1. An access control system for restricting access through a passageway, the access control system comprising:

a shaft which is rotatable about a central axis,
a barrier fixed to the shaft to rotate therewith, and
a brake assembly for applying a braking force to the shaft,
wherein the brake assembly comprises a planetary gear as claimed in any of Claims 1 to 9, wherein the sun gear is centred on the shaft and is rotatable about the central axis of the shaft and relative to the shaft, and wherein one of the carrier or the ring gear is fixed against rotation and wherein the other of the carrier or the ring gear is connected to the shaft to rotate therewith, and wherein the brake assembly further comprises an electromagnetic brake comprising an electromagnet and an armature, the armature being connected to or integral with the sun gear to rotate therewith, wherein at least one of the electromagnet or the armature is moveable upon energisation of the electromagnet between an operative position in which the electromagnet and the armature are in contact, and an inoperative position in which the electromagnet is spaced from the armature.

Clause 2. An access control system as recited in Clause 1, wherein the electromagnet is fixed against axial movement and wherein the armature is biased to the inoperative position.

Clause 3. An access control system as recited in Clause 2, wherein the brake assembly further comprises a spring positioned between the armature and the sun gear, the spring being arranged to bias the armature to the inoperative position.

Clause 4. An access control system as recited in Clause 3, wherein the spring is a disc spring or spring plate.

Clause 5. An access control system as recited in any of Clauses 1 to 4, wherein the electromagnetic brake comprises a friction member fixed against rotation, whereby in the operative position the armature is in frictional contact with the friction member, and in the inoperative position the armature is spaced from the friction member so as to permit free rotation of the armature relative to the friction member.

Clause 6. An access control system as recited in Clause 5, wherein the friction member is a surface of the electromagnet which is in contact with the armature when the armature is in the operative position.

Clause 7. An access control system as recited in any of Clauses 1 to 6, wherein the sun gear is moveable relative to the shaft in an axial direction of the shaft.

Clause 8. An access control system as recited in any of Clauses 1 to 7, further comprising a bearing located in a body of the electromagnetic brake and surrounding the shaft.

Clause 9. An access control system as recited in any of Clauses 1 to 8, wherein the ring gear is fixed against rotation and the carrier is connected to the shaft to rotate therewith.

Clause 10. An access control system as recited in Clause 9, further comprising a shaft collar which surrounds the shaft, and wherein a portion of the carrier extends parallel to the shaft and between the shaft collar and the shaft, the shaft collar clamping the carrier to the shaft such that the carrier is fixed against relative rotation with respect to the shaft.

Clause 11. An access control system as recited in of Clauses 1 to 10, comprising 11 planet gears, and wherein the ring gear has 82 teeth, the sun gear has 50 teeth, and the planet gears each have 16 teeth.

Clause 12. An access control system as recited in any of Clauses 1 to 11, wherein one or more of the sun gear, ring gear and planet gears is formed of a plastic material.

Clause 13. An access control system as recited in any of Clauses 1 to 12, further comprising a control unit configured to control the movement of the armature between the operative and inoperative positions, wherein the control unit is programmed to:

- receive a signal providing an instruction to move the barrier;
- control the electromagnetic brake to move the armature into the inoperative position, in response to receipt of said signal; and
- control the shaft to rotate once the armature has been moved into the inoperative position,

and further comprising an authorisation unit configured to generate said signal providing an instruction to move the barrier.

Non-limiting embodiments of the invention will now be described, by way of example only, with reference to the accompanying drawings in which:

Figure 1 is a cross-sectional schematic diagram of a conventional prior art planetary gear.
Figure 2 is a cross-sectional schematic diagram of a planetary gear in accordance with the present invention.

Figure 3A is a front view of an access control system in accordance with the present invention.

Figure 3B is a top view of the access control system of Figure 3A.

Figure 4 is a front view of the brake assembly of Figure 3A.

Figure 5a is an exploded perspective view of the brake assembly of Figures 3A and 4.

Figure 5b is a portion of the exploded perspective view of Figure 5a, but with the spring plate replaced by a conventional spring.

Figure 6 is a cross-sectional view of the brake assembly along line A-A in Figure 4.

Figure 7 is a cross-sectional view of the brake assembly along line B-B in Figure 4.

Figure 8 is a perspective view of the planetary gear mechanism within the brake assembly of Figures 3A, 4 and 5a, with other components of the brake assembly hidden.

Figure 9 is a perspective view of the sun gear shown in Figure 5a.

Figure 10 is a perspective view of the ring gear shown in Figure 5a.

Figure 11A is a perspective view of a planet gear shown in Figure 5a.

Figure 11B is a side view of the planet gear shown in Figure 11A.

Figure 12 is a perspective view of the carrier shown in Figure 5a.

Figure 13 is a perspective view of the spring plate shown in Figure 5a.

Figure 14 is a front view of a portion of the brake assembly of Figures 3A, 4 and 5a, showing the carrier mounted on the shaft and one planet gear.

Figure 15 is a front view of a portion of the brake assembly of Figures 3A, 4 and 5a, showing the armature mounted on the sun gear.

Figure 16 is a plan view of an access control system according to the present invention.

Figure 17 is a cross-section of the access control system of Figure 16 through line C-C indicated in Figure 16.

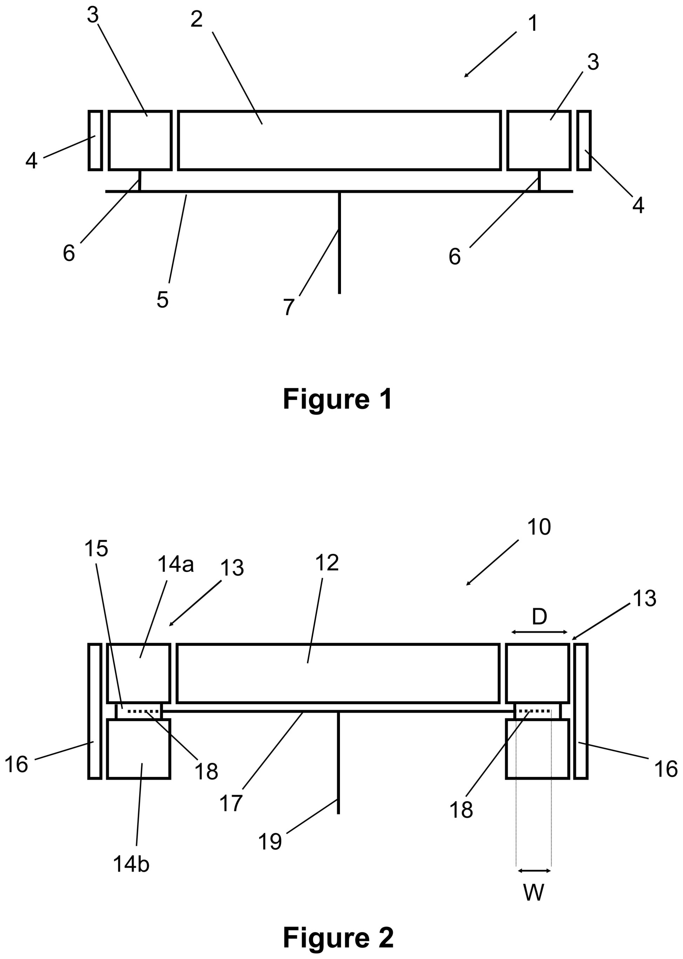

Figure 1 shows a schematic, cross-sectional diagram of a conventional prior art planetary gear 1 comprising a sun gear 2, a plurality of planet gears 3, and a ring gear 4, all of which lie in the same plane, with the planet gears arranged between the sun gear 2 and the ring gear 4.

In use, the planet gears 3 are arranged to orbit the sun gear 2. In addition, each gear may rotate about its longitudinal axis, with the longitudinal axis of each gear being perpendicular to the plane in which the gears all lie, although one of the sun gear 2 or ring gear 4 may be fixed against rotation depending on the particular technical purpose and application of the planetary gear 1.

A carrier 5 is parallel to said plane, and a plurality of stub shafts 6 (one for each planet gear 3) extend from the carrier 5 in a direction perpendicular to the plane in which the gears all lie, towards the gears. The planet gears 3 are each mounted on one of a stub shafts 6, each planet gear 3 being arranged centrally about its stub shaft 6 and being rotatable about its stub shaft 6. The carrier 5 may connect to external components, indicated by 7, which may be fixed to rotate with the carrier 5.

In this conventional arrangement, the load of the planetary gear 1 is cantilevered off the carrier plate 5. This can lead to high forces on the stub shafts 6 which can cause deformation of the stub shafts 6, the carrier 5 and the planet gears 3.

Figure 2 shows a schematic, cross-sectional diagram of a planetary gear 10 in accordance with the present invention. The planetary gear 10 comprises a sun gear 12, a plurality of planet gears 13, and a ring gear 16.

Each planet gear 13 has a first gear portion 14a, a second gear portion 14b, and an intermediate portion 15 lying between the first and second gear portions 14a, 14b. The first gear portions 14a of the planet gears 13 engage with the sun gear 12 and the ring gear 16, whereas the second gear portions 14b engage only with the ring gear 16.

The force exerted by the ring gear 16 on the second gear portion 14b of each planet gear 13 will generally balance with the force exerted by the sun gear 12 on the first gear portion 14a of that planet gear, such that there is generally no moment acting to rotate that planet gear 13 out of alignment with the other gears in the planetary gear (i.e., there is generally no moment acting to rotate that planet gear 13 clockwise or anticlockwise in the perspective shown in Figure 2). Nonetheless, as the ring gear 16 also engages with the first portion 14a of the planet gears 13, any such non-axial movement (i.e., any rotation of the planet gears 13 clockwise or anticlockwise in Figure 2) is entirely prevented. However, in an alternative arrangement, the ring gear 16 may engage with the second portions 14b of the planet gears 13 only without deviating from the scope of the present invention.

The diameters of the first and second gear portions 14a, 14b of each planet gear 13 are constant along the longitudinal axis of that planet gear 13, which is necessary for the gear portions 14a, 14b to properly engage with the sun and ring gears 12, 14. Furthermore, the diameter of the first gear portion 14a of each planet gear 13 must be the same as the diameter of the first gear portion 14a of every other planet gear 13, and the same for the second gear portion 14b.

In the illustrated embodiment, the diameter of the first gear portion 14a of each planet gear 13 is the same as the diameter of the second gear portion 14b of that planet gear, and is indicated as D. However, alternative arrangements are possible where the diameter of the first gear portion 14a may be different to the diameter of the second gear portion 14b, without deviating from the scope of the present invention.

Also, in the illustrated embodiment, the first gear portion 14a and second gear portion 14b of each planet gear 13 both have the same length measured in a direction parallel to the longitudinal axis of that planet gear 13, and the intermediate portion 15 has a shorter length in this direction than the gear portions 14a, 14b. However, alternative arrangements are possible (where, for example, the length of the gear portions 14a, 14b and the intermediate portion 15 of a planet gear 13 are all the same or are all different) without deviating from the scope of the present invention.

Unlike the first and second gear portions 14a, 14b of a planet gear 13, the diameter of the intermediate portion 15 of that planet gear 13 may vary along the longitudinal axis. Typically, as shown in the illustrated embodiment, the diameter D of the gear portions 14a, 14b is greater than or at least the same as the maximum diameter of the intermediate portion 15, such that the planet gear 13 is waisted by the intermediate portion, i.e., it has a central waist portion.

In the illustrated embodiment, the planet gears are solid and not hollow. However, alternative arrangements are possible wherein there is a small diameter hole/bore (e.g., of approximately 3 mm) through each planet gear in a direction parallel to the longitudinal axis of the planet gear. A hollow planet gear would have greater resistance to shearing than a solid planet gear. Furthermore, a pin may be tightly inserted within the hole/bore to strengthen the planet gear against the side loads it has to bear as part of the planetary gear system.

In use, when the planetary gear 10 is assembled, the intermediate portion 15 is located within in a slot (indicated by dashed line 18) in the outer edge of a carrier 17, which extends between the intermediate portions 15 of the different planet gears 13, rather than being attached to the planet gears 13 via stub shafts, which are absent from this planetary gear 10. The planet gears 13 are held in the slots 18 by the ring gear 14.

Each planet gear 13 is rotatable (about its own central, longitudinal axis) within its slot 18. The intermediate portion 15 of the planet gear 13 is a smooth bearing surface so as to limit friction between the intermediate portion 15 and then edge of the slot 18 in contact with the intermediate portion 15 when the planet gear 13 is rotating within the slot 18.

The carrier 17 may connect to external components, indicated by 19, which may be fixed to rotate with the carrier 17.

In this arrangement, the load of the planetary gear 10 is not cantilevered off the carrier 17, and there are no stub shafts. As a result, the risk of deformation of the carrier 17 and planet gears 13 due to high forces is significantly reduced.

Furthermore, the diameter D of the gear portions 14a, 14b of each planet gear 13 is greater than the radial width W of the slots 18 into which each planet gear 13 is inserted. Thus, axial movement of the planet gears 13 within the slots is prevented. Moreover, the thickness along the longitudinal axis of the intermediate portion 15 of each planet gear 13 is slightly greater than the thickness of the carrier 17, such that the planet gear can rotate smoothly within the slot (without the gear portions 14a, 14b dragging on the upper and lower surfaces of the carrier plate).

The utilisation of a planetary gear in accordance with the present invention in an electromagnetic break of an access control system will now be described.

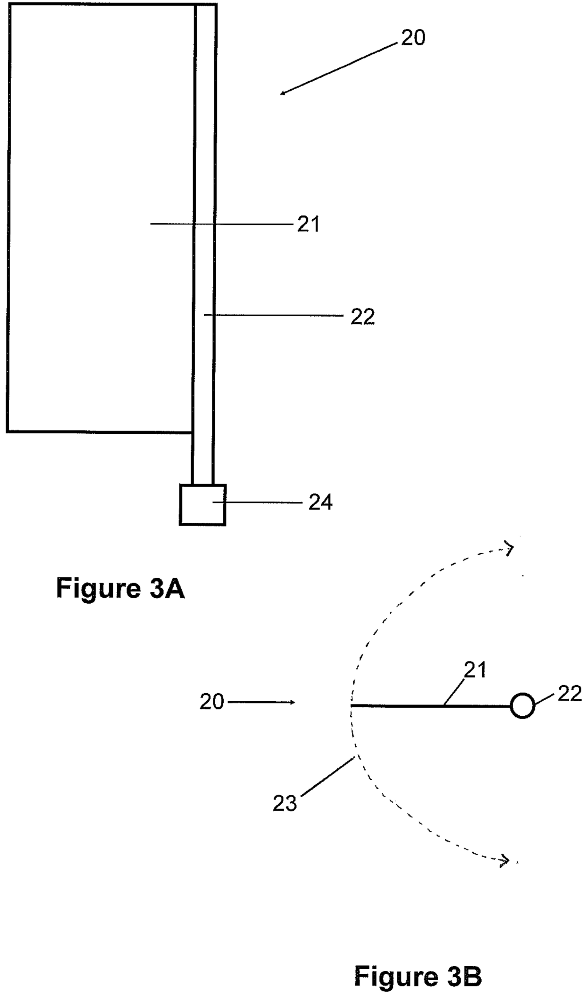

Figures 3A and 3B show a front and a top view, respectively, of an access control system 20. The system 20 comprises a barrier 21 which is attached on one end to a shaft 22, the shaft 22 being rotatable about its longitudinal axis such that the barrier 21 can swing through the range of motion 23. Rotation of the shaft 22 is driven by a motor (not shown), either directly or indirectly via a pulley.

In use, the barrier 21 is arranged to extend across a passageway to restrict access through the passageway. In order to permit access through the passageway, the shaft 22 is rotated, causing the barrier 21 to move out of the passageway. The passageway may be any entry portal or gate through which a person must pass to enter a building or any other restricted area. Typically, persons requiring access through the passageway must be authorised, with the authorisation process either being automated, for example by means of an identification card reader or facial recognition system, or may be manually operated by a user, such as a porter or guard, upon presentation of appropriate authorisation.

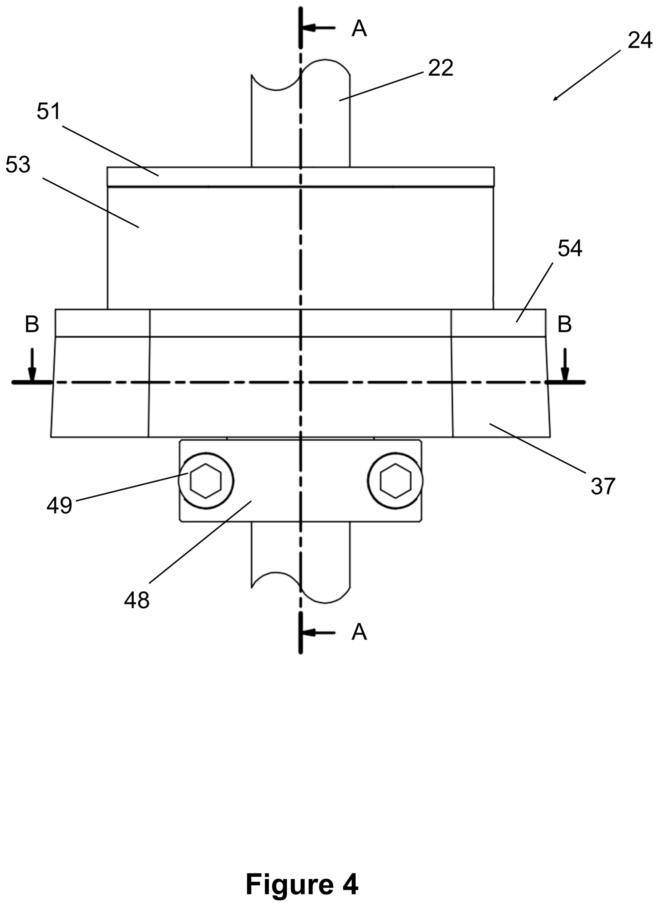

In order to prevent the barrier 21 from being forced open, for example by a person pushing the barrier 21, a brake assembly 24 is provided, which, when active, applies a braking force to the shaft 22, thus preventing the barrier 21 from being moved. A front view of the brake assembly 24 is shown in Figure 4.

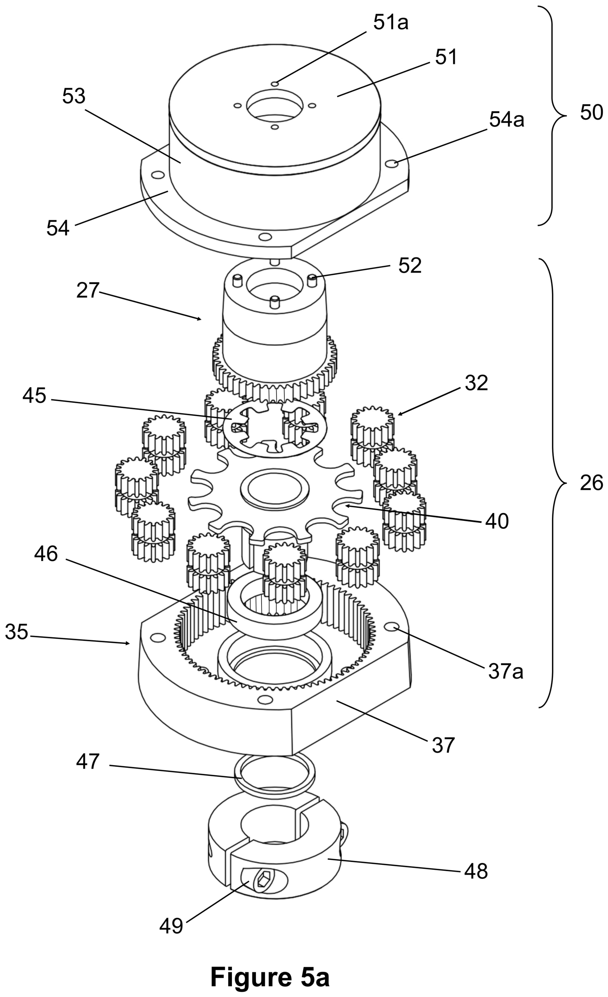

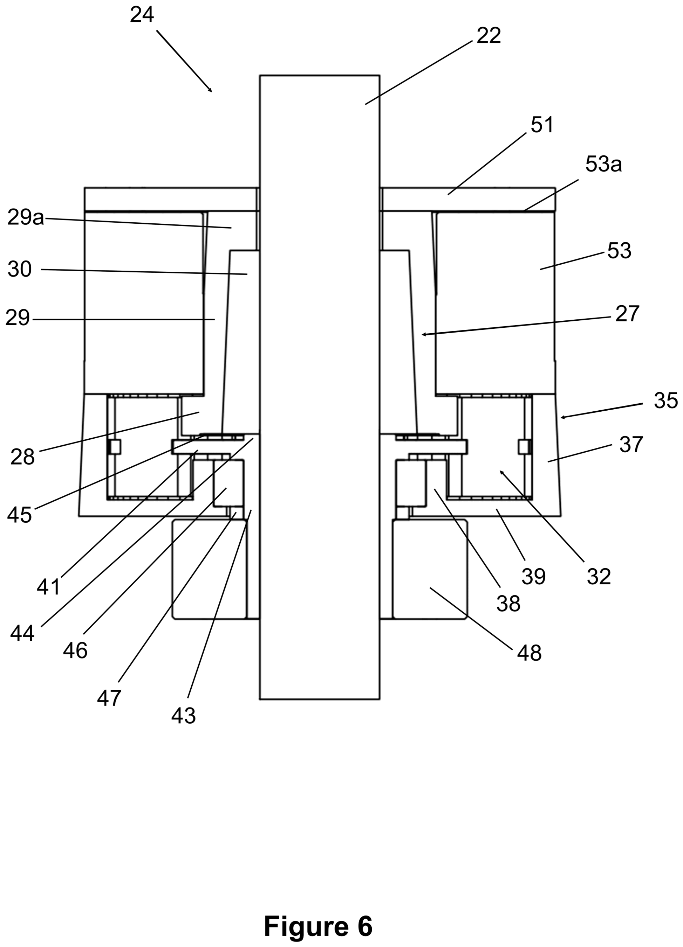

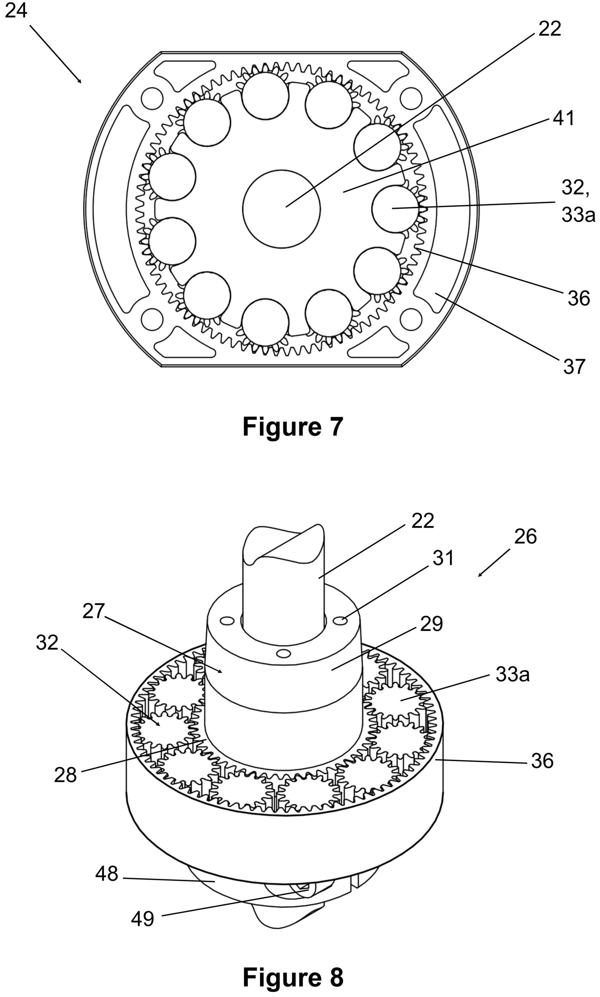

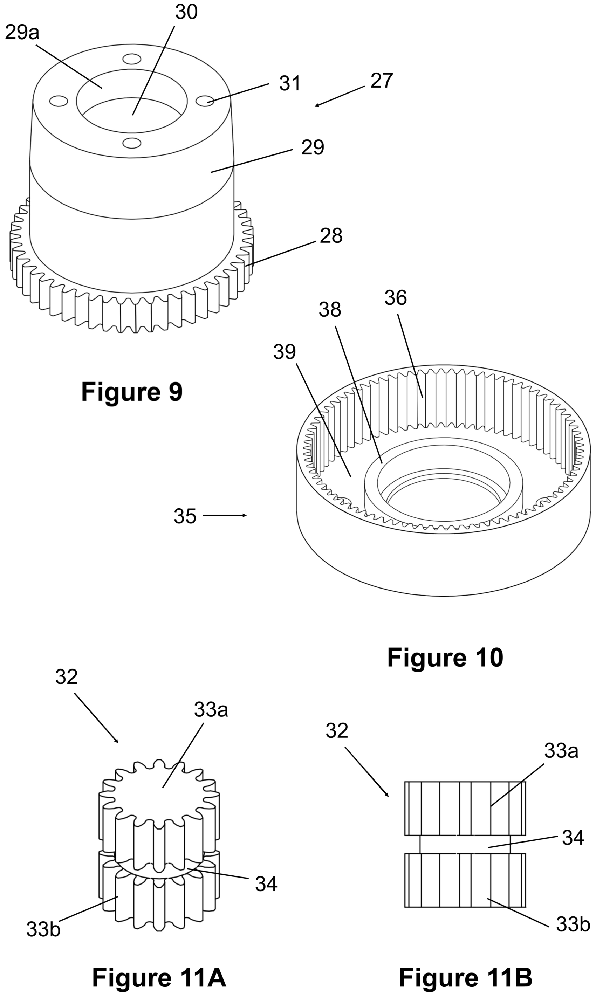

Figure 5a shows an exploded view of the components of the brake assembly 24 with the shaft 22 not shown. Figures 6 and 7 show two cross sections through the brake assembly 24. Figure 6 is symmetrical about the shaft 22. Figures 9 to 15 show the different components of the brake assembly 24 individually or when assembled with some of the other components of the brake assembly 24.

The brake assembly 24 comprises a planetary gear 26, which comprises a sun gear 27, ring gear 35, a plurality of planet gears 32, and a carrier 40, which are arranged as described above in respect of Figure 2. The gears are all made of plastic (the planet gears in particular are made of nylon), although they may alternatively be made of other materials. The carrier 40 may be made of plastic (such as nylon) or aluminium or, most preferably, brass. It could alternatively be made of another suitable material.

The sun gear 27 is arranged centrally around the shaft 22. As shown in Figure 9, it comprises a gear portion 28, and a cylindrical portion 29 with a central passage 30 therethrough for receiving the shaft 22. As best shown in Figure 6, the top 29a of the cylindrical portion 29 overhangs a portion of the central passage 30. The top of the cylindrical portion 29 is arranged to attach to the armature 51, discussed below.

The ring gear 35 is integrated in the outer casing 37 of the brake assembly 24 and is fixed against rotation by means of fasteners (not shown) which pass through holes 37a in the outer casing 37 to fix the outer casing 37 and ring gear 35 to a chassis member (not shown) in the access control system 20.

As shown in Figure 10, the ring gear 35 comprises an internal gear portion 36, a cylindrical central portion 38, and a floor 39 which extends between the internal gear portion 36 and the cylindrical central portion 38. As shown in Figures 6 and 8, the planet gears 32 are positioned between the internal gear portion 36 and the cylindrical central portion 38, above the floor 39, and are thus the planetary gear 26 is enclosed from beneath by the floor 39 and the cylindrical central portion 38.

Each planet gear 32 has a first gear portion 33a, a second gear portion 33b, and an intermediate portion 34. As described above in respect of Figure 2, the first gear portion 33a of each planet gear 32 engages the sun gear 27 and the ring gear 35 whereas the second gear portion 33b of each planet gear 32 engages only the ring gear 35. The diameter of each gear portion 33a, 33b is the same and is constant along the longitudinal axis of the planet gear 32.

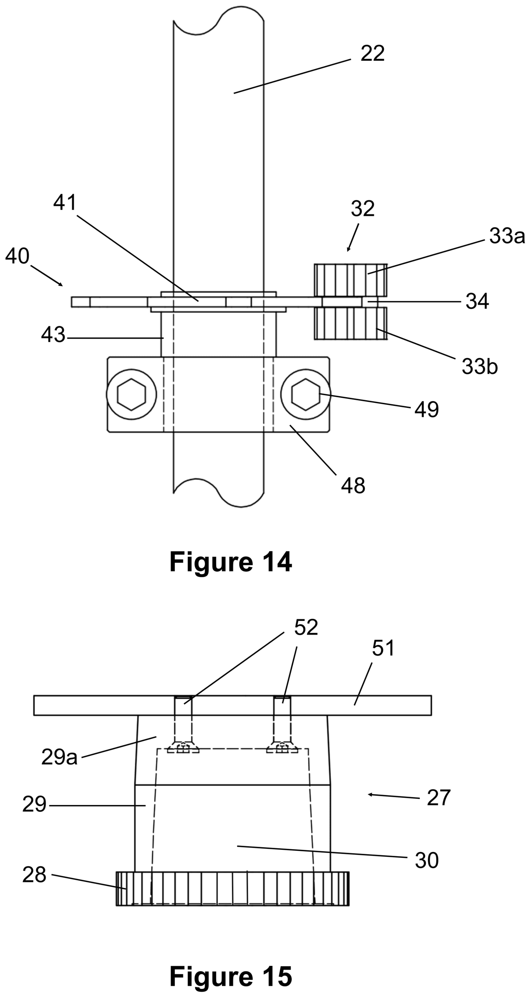

The carrier 40 is arranged centrally around the shaft 22 and comprises a plate portion 41 with slots 42 into which the intermediate portions 34 of the planet gears 32 are inserted so as to locate the planet gears 32, as discussed above in respect of Figure 2. In the illustrated embodiment, the carrier 40 is 2 mm thick. The carrier 40 also comprises a cylindrical portion 43 which surrounds a portion of the shaft 22 beneath the plate portion 41, as best shown in Figures 6 and 14. The cylindrical portion 43 of the carrier 41 is fixed to the shaft 22 by a shaft collar 48, which surrounds part of the cylindrical portion 43 of the carrier 40 and clamps it to the shaft 22 when the screws 49 are tightened. The carrier 40 is therefore fixed to the shaft 22 such that it rotates with the shaft 22 and vice versa.

The above-described and illustrated arrangement of the shaft 22, ring gear 35 and carrier 40 is preferred. However, in an alternative embodiment, the ring gear may be fixed to the shaft to rotate therewith, and the carrier may be fixed against rotation.

Returning to the illustrated embodiment, the shaft collar 48 is positioned below the ring gear 35, such that the cylindrical portion 43 of the carrier 40 extends through the centre of the cylindrical centre portion 38 of the ring gear 35. As shown in Figure 6, a circular bearing 46 is arranged centrally around the cylindrical portion 43 of the carrier 40 and between the cylindrical portion 43 of the carrier 40 and the cylindrical central portion 38 of the ring gear 35. A spacer ring 47 is arranged centrally around the cylindrical portion 43 of the carrier 40, vertically between the bearing 46 and the shaft collar 48.

In use, when the shaft 22 and carrier 40 are rotated, the planet gears 32 are driven between the fixed ring gear 35 and rotatable sun gear 27, with each planet gear 32 orbiting the sun gear 27. Rotation of the shaft 22 and carrier 40 is therefore transferred to the sun gear 27 via the planet gears 32, with the sun gear 27 rotating at a greater speed than the shaft 22 (explained below).

The brake assembly 24 further comprises an electromagnetic brake 50, shown in Figures 5a and 6, arranged to apply a braking force to the sun gear 27, as explained below. With the sun gear 27 prevented from rotating by the electromagnetic brake 50, and the ring gear 35 fixed against rotation, the planet gears 32 cannot orbit the sun gear 27, and thus the carrier 40 cannot move. The shaft 22, being fixed to rotate with the carrier 40, therefore cannot rotate either, and the barrier 21 of the access control system 20 cannot be opened.

The electromagnetic brake 50 comprises an armature 51 and an electromagnet 53.

The electromagnet 53 is arranged centrally around the cylindrical portion 29 of the sun gear 27. The electromagnet 53 is integrated with a lid 54 of the outer casing 37 of the brake assembly 24. The lid comprises several holes 54a arranged to correspond to holes 37a on the outer casing 37, such that fasteners (not shown) can pass through the holes 37a, 54a to fix the lid 54 to the outer casing 37. The planetary gear 26 is therefore enclosed entirely by the outer casing 37, the lid 54, and the electromagnet 53, as shown in Figures 4 and 6.

The fasteners which fix the lid 54 to the outer casing 37 are the same fasteners described above which pass through holes 37a in the outer casing 37 to fix the ring gear 35 and the outer casing 37 against rotation by fixing them to a chassis member (not shown) in the access control system 20. These fasteners therefore pass through both holes 54a and 37a. Therefore, the electromagnet 53 is also fixed against rotation by virtue of the lid 54 being fixed to the outer casing 37.

At the top of the electromagnet 53 is a friction surface 53a arranged to engage with the armature 51 to prevent relative rotation between the armature 51 and the electromagnet 53, and thereby to prevent rotation of the armature 51. The friction surface 53a is not shown in the figures but is indicated in Figure 6.

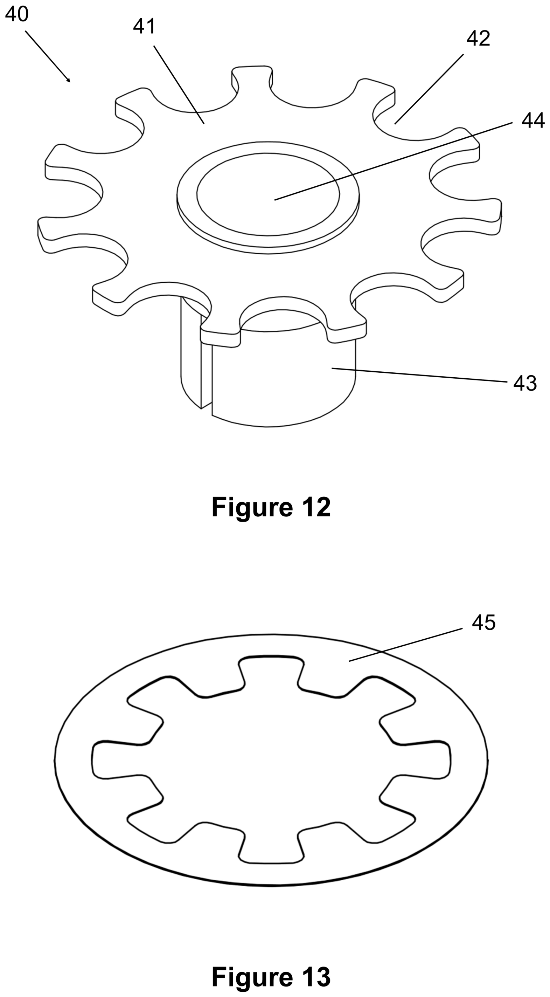

As shown in Figures 5a and 15, fasteners 52 pass through holes 31 in the top 29a of the cylindrical portion 29 of the sun gear 27 and through corresponding holes 51a in the armature 51 to fix the sun gear 27 and the armature 51 together such that they rotate together. A spring plate 45, shown in Figures 5a and 13, is fitted around a central raised portion 44 of the carrier 40, and is situated vertically between the plate portion 41 of the carrier 40 and the gear portion 28 of the sun gear 27. The spring plate 45 is arranged to bias the armature 51 to an inoperative position, that is, a position in which there is an operation clearance (i.e., a vertical gap) between the armature 51 and the friction surface 53a of the electromagnet 53. This operational clearance permits free rotation of the armature 51, and thus the sun gear 27, relative to the electromagnet 53, which is fixed against rotation. This position of the armature 51 is referred to as the inoperative position (i.e., there is no braking force applied to the sun gear 27 by the armature 51).

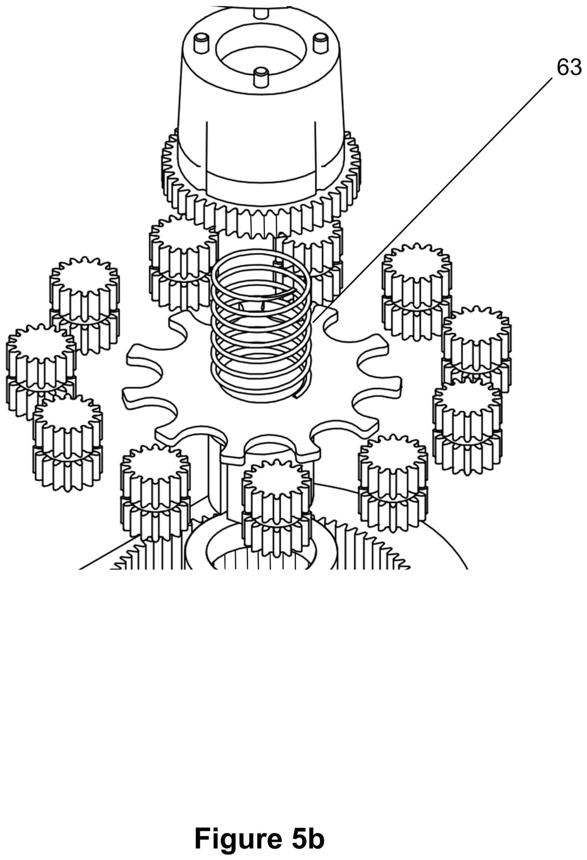

In an alternative embodiment, a coil spring 63 could take the place of the spring plate 45, as shown in Figure 5b. Other types and shapes of spring could be used.

The armature 51 is magnetic. When the electromagnet 53 is energised, the armature 51 is pulled under electromagnetic attraction toward the electromagnet 53, which includes an electromagnetic coil (not shown). This movement of the armature 51 is permitted by the spring plate 45. The biasing force of the spring plate 45 towards the sun gear 27 is overcome by the electromagnetic attraction towards the electromagnet 53, such that the armature 51 is brought into frictional contact with the friction surface 53a against the bias of the spring plate 45. Accordingly, a braking force is applied to the armature 51 by means of the frictional contact between the armature 51 and the friction surface 53a and the magnetic force pulling the armature 51 towards the electromagnet 53. The armature 51, in turn, provides a braking force to the sun gear 27 via the fixings 52. This position of the armature 51 is referred to as the operative position (i.e., the armature 51 is brought into contact with the electromagnet 53 such that a braking force is applied to the sun gear 27 by the armature 51). In the above arrangement, the electromagnetic brake 50 is actuated by energising the electromagnet 53 (a so-called "power-on" electromagnetic brake), meaning that in the event of a power failure the electromagnetic brake 50 will release, permitting the barrier 21 to be opened (i.e., the access control system 20 is "fail-safe").

The arrangement described above is preferred due to its uncomplicated construction and the strong braking force which it provides, whilst ensuring that the access control system 20 remains fail-safe. However, it will be appreciated that other arrangements would be conceivable to the skilled person, in which an armature and an electromagnet are relatively movable between an operative position in which the armature is in contact with the electromagnet to provide a braking force to the sun gear, and an inoperative position in which the armature is spaced from the electromagnet, such that the armature provides no braking force to the sun gear. For example, the electromagnet may be fixed against rotation but permitted to move axially upon energisation of the electromagnet so as to make contact with the armature and apply a braking force to the sun gear. Furthermore, instead of a spring plate to bias the armature to the inoperative position, a disc spring or other spring member could be used. Further alternative arrangements of the brake assembly will be conceivable to the skilled person, without deviating from the scope of the present invention.

As discussed above, the sun gear 27 is centred on the shaft 22 and is rotatable relative to (i.e., around) the shaft 22. Accordingly, rotational movement of the shaft 22 is not transferred directly to the sun gear 27 or vice versa (such rotational movement only being transferred by means of the planet gears 32, as described above). The sun gear 27 rotates at a greater speed than the shaft 22 at a speed ratio corresponding to the gear ratio of the planetary gear 26.

The gear ratio of a planetary gear 26 is dependent upon the number of teeth of the sun gear 27 and of the ring gear 35. Where the ring gear 27 is fixed against rotation, as in the illustrated embodiment, the gear ratio can be determined according to the equation:

$$R = 1 / (1 + N_R / N_s)$$

where R is the gear ratio, $N_R$ is the number of teeth of the ring gear 35 and $N_s$ is the number of teeth of the sun gear 27.

In the illustrated embodiment, the planetary gear 26 comprises a ring gear 35 having 82 teeth, a sun gear 27 having 50 teeth and 11 planet gears 32 each having 16 teeth. Therefore, this arrangement provides a gear ratio of 1:2.64. Accordingly, the sun gear 27 rotates 2.64 times faster than the shaft 22. Alternative numbers of planet gears and teeth are possible, resulting in different gear ratios, as will be known to the skilled person.

The torque of the sun gear 27 is reduced by the same ratio, relative to the torque of the rotating shaft 22. Accordingly, the braking force required to prevent rotation of the sun gear 27 at a given torque is significantly reduced. A person attempting to force the barrier 21 open will apply a force to the barrier 21 at a given perpendicular distance from the central axis of the shaft 22, which results in a potentially very large torque being generated about the central axis of the shaft 22. If a person attempts to force the barrier open when the electromagnetic brake 50 is actuated (i.e., when the electromagnet 53 is energised and the armature 51 is in the operative position), the necessary braking force that must be applied to the to the sun gear 27 in order to withstand this potentially very large torque applied to the shaft 22 is greatly reduced. This means that the overall dimensions of the electromagnetic brake 50 (in particular, the surface area of the engaging surfaces of the armature 51 and electromagnet 53) can be minimised, as can the required strength of the magnetic field induced by the electromagnet 53. Thus, not only can the electromagnetic brake 50 be reduced in size, but the power consumption of the electromagnetic brake 50 can also be reduced.

Due to the spline effect of the gears, the sun gear 27 is able to move relative to the shaft 22, the ring gear 35 and the planet gears 32 in an axial direction of the shaft 22 (vertically as shown in the figures). Accordingly, the working gap of the electromagnetic brake 50 (i.e., the operational clearance between the engaging surfaces of the armature 51 and the electromagnet 53) can be adjusted independently of the position of the shaft 22. This allows easy and reliable optimisation of the brake gap. This may be achieved, by way of example, using simple sprung components (not shown). The armature 51 can thus be easily positioned so that it is clear of the friction surface 53a of the electromagnet 53 when the electromagnet 53 is de-energised, but also such that the operational clearance is sufficiently small to ensure that the armature 51 moves to engage with the friction surface 53a when the electromagnet 53 is energised.

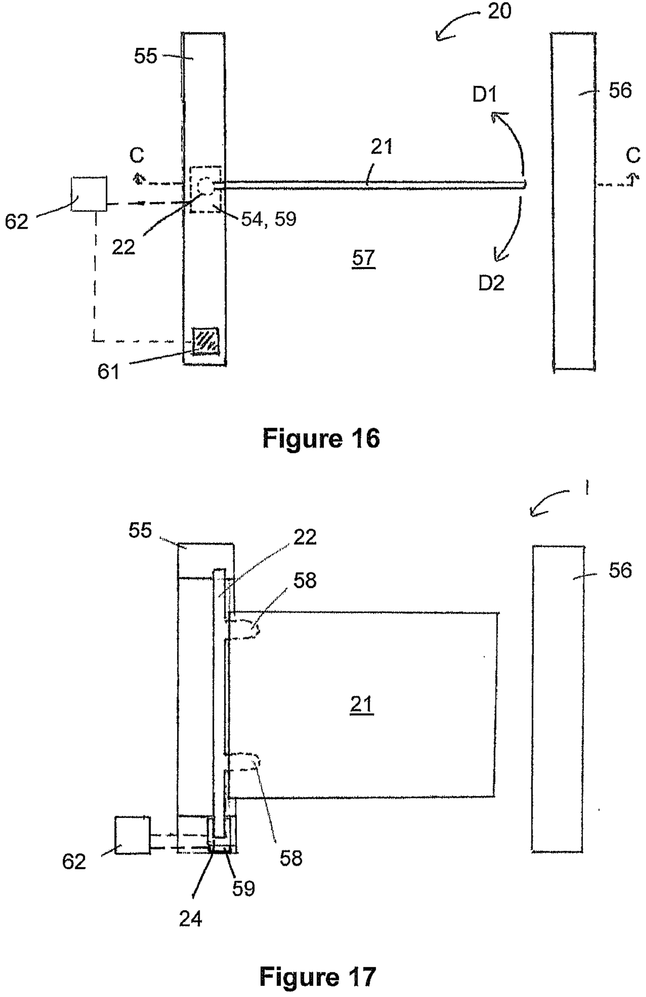

With reference to Figures 16 and 17, there is shown a further embodiment of an access control system 20 in accordance with the present invention, with corresponding features being indicated with like numerals. The access control system 20 comprises two walls 55, 56 defining a passageway 57 between them. The barrier 21 extends across the passageway from one of the walls 55, substantially perpendicularly to said wall 55. Alternative embodiments of the present invention may comprise two or more barriers, with at least one barrier extending across the passageway from each of the walls. The barrier is attached to the shaft 22, which is rotatably mounted within the wall 55, such that the barrier is capable of movement within the passageway in a first direction D1 and a second direction D2.

Figure 17 shows a schematic cross section of the access control system 20 through line C-C indicated in Figure 16. The barrier 21 is attached to the shaft 22 by means of brackets 58. The access control system 20 comprises a brake assembly 24 as described in detail above. A motor 59 is provided for driving the rotation of the shaft 22. The motor may be provided at an end of the shaft.

The access control system 20 comprises an authorisation unit 61 in the form of an identity card reader positioned on the upper surface of the wall 55. Alternative embodiments may comprise any appropriate means for authorising access through the passageway 57, such that the passage of people through the passageway 57 is permitted only for authorised persons. The means may be automatic (for example, a facial recognition system), permitting passage of an authorised person without the need for interaction by any other person, or may be controlled by, for example, a porter guard who authorises access manually. Multiple means for authorising access may be provided.

The access control system 20 further comprises a control unit 62 which is electronically connected to each of the brake assembly 24, the motor 59 and the identity card reader 61. Whilst the control unit 62 is shown externally of the wall 55, it will be appreciated that the control unit may be housed within the wall 55 together with the other components of the access control system 20.

An exemplary procedure for controlling access through the passageway 57 will now be described. At first, the access control system 20 is configured such that the barrier 21 extends across the passageway 57 so as to prevent a person passing through the passageway 57 without first opening the barrier 21. The brake assembly 24 is configured such that the armature 51 is in the operative position as described above, such that the brake assembly 24 is in an actuated state.

Accordingly, in the operative state, if a person attempts to push or pull the barrier 21 open in either direction D1 or D2, the braking force applied to the sun gear 27 of the brake assembly 24 by the armature 51 prevents the shaft 22 from rotational movement and thus prevents the barrier 21 from being opened.

In order to gain access, an authorised person presents authentication, such as an identity card or biometric ID, to the identity card reader 61, which transmits information relating to the owner of the identity card to the control unit 62. The control unit 62 processes said information in order to determine whether or not the owner of the identity card (or other authentication) is an authorised person and, if so, send a signal to the brake assembly 24 to move the armature 51 from the operative position to the inoperative position. Accordingly, the braking force to the sun gear 27 is released and the sun gear 27 and shaft 22 are free to rotate. The control unit 62 also sends a signal to the motor 59 to drive the shaft 22 such that the barrier opens, allowing access through the passageway 57. The control unit 62 is further configured the send a signal to the motor 59 to drive the shaft 22 so as to close the barrier 21, either after a predetermined time period, or alternatively once it has been determined that the authorised person has passed through the passageway 57, for example using additional sensors configured to detect the presence of a person within the passageway 57.

The invention has been described above with reference to specific embodiments, given by way of example only. It will be appreciated that different arrangements of the system are possible, which fall within the scope of the appended claims.

## Claims

1. A planetary gear comprising a sun gear, a plurality of planet gears, a carrier, and a ring gear, wherein:

   each planet gear has a longitudinal axis parallel to the central axis of the sun gear and comprises a first gear portion, a second gear portion, and an intermediate portion between the first and second gear portions along the longitudinal axis, each of said portions being centred on the longitudinal axis, and wherein each planet gear is a rigid body such that none of said portions of the planet gear is rotatable relative to any other of said portions of the planet gear;
   the first gear portion of each planet gear engages with the sun gear;
   the second gear portion of each planet gear engages with the ring gear and not with the sun gear;

the carrier is arranged parallel to the sun gear and between the intermediate portions of each planet gear;

the carrier comprises a plurality of slots along its outer edge; and

the intermediate portion of each planet gear is a reduced diameter waist portion arranged to locate in one of said slots so as to attach the intermediate portion to the carrier and so as to allow rotation of the planet gear about its longitudinal axis.

2. A planetary gear as claimed in Claim 1, wherein the first gear portion of each planet gear also engages with the ring gear, such that the first gear portion of each planet gear is engaged between the sun gear and the ring gear in a direction perpendicular to the central axis of the sun gear.

3. A planetary gear as claimed in Claim 1 or Claim 2, wherein the diameters of each of the first and second gear portions of the planet gears are equal.

4. A planetary gear as claimed in any preceding claim, wherein the slots are generally U-shaped or sectors of a circle.

5. A planetary gear as claimed in any preceding claim, wherein the maximum diameter of the intermediate portion of each planet gear is less than both the diameters of the first and second gear portions of said planet gear, and wherein the diameters of the first and second gear portions of each planet gear are larger than the radial width of each respective slot, such that, when a planet gear is located by a slot, said planet gear is prevented from longitudinal removal from the slot.

6. A planetary gear as claimed in any preceding claim, wherein the surface of the intermediate portion of each planet gear is smooth so as to limit friction between the intermediate portion and the edge of the slot of the carrier in which the intermediate portion is located.

7. A planetary gear as claimed in any preceding claim, wherein each planet gear is formed as one integral body.

8. A planetary gear as claimed in any preceding claim, wherein each planet gear has a hole passing through the planet gear, the hole extending along a direction parallel to the longitudinal axis of the planet gear, the planetary gear further comprising a plurality of pins, each pin being inserted with a tight fit into, and filling substantially the entire length of, the hole of a different one of the planet gears.

9. A planetary gear as claimed in Claim 8, wherein the hole of each planet gear is 1.5 to 4.5 mm in diameter.

10. An access control system for restricting access through a passageway, the access control system comprising:

a shaft which is rotatable about a central axis, a barrier fixed to the shaft to rotate therewith, and a brake assembly for applying a braking force to the shaft, wherein the brake assembly comprises a planetary gear as claimed in any preceding claim, wherein the sun gear is centred on the shaft and is rotatable about the central axis of the shaft and relative to the shaft, and wherein one of the carrier or the ring gear is fixed against rotation and wherein the other of the carrier or the ring gear is connected to the shaft to rotate therewith, and wherein the brake assembly further comprises an electromagnetic brake comprising an electromagnet and an armature, the armature being connected to or integral with the sun gear to rotate therewith, wherein at least one of the electromagnet or the armature is moveable upon energisation of the electromagnet between an operative position in which the electromagnet and the armature are in contact, and an inoperative position in which the electromagnet is spaced from the armature.

11. A planet gear comprising two gear portions and an intermediate portion, positioned longitudinally between the gear portions, which is of smaller diameter than the maximum diameter of each gear portion, forming a waist.

**Figure 1**

**Figure 2**

**Figure 3A**

20

21

22

24

**Figure 3B**

20

21

22

23

**Figure 4**

**Figure 5a**

63

**Figure 5b**

**Figure 6**

**Figure 7**

**Figure 8**

**Figure 9**

**Figure 10**

**Figure 11A**

**Figure 11B**

40

41

42

44

43

**Figure 12**

45

**Figure 13**

**Figure 14**

**Figure 15**

**Figure 16**

**Figure 17**

# EUROPEAN SEARCH REPORT

**Application Number**

EP 25 21 9195

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2004 061817 A1 (BOSCH GMBH ROBERT [DE]) 6 July 2006 (2006-07-06) | 1,4,6,7, 11 | INV. F16H57/08 F16H1/28 E06B11/00 |
| A | * paragraph [[0031]]; figures 1-3,5 * | 2,3,5, 8-10 | |

-----

**TECHNICAL FIELDS SEARCHED (IPC)**

F16H
E06B

The present search report has been drawn up for all claims

| Place of search | Date of completion of the search | Examiner |
|---|---|---|
| Munich | 10 April 2026 | Belz, Thomas |

EPO FORM 1503 03.82 (P04C01)

## ANNEX TO THE EUROPEAN SEARCH REPORT
## ON EUROPEAN PATENT APPLICATION NO.

EP 25 21 9195

This annex lists the patent family members relating to the patent documents cited in  the above-mentioned European search report.
The members are as contained in the European Patent Office EDP file on
The European Patent Office is in no way liable for these particulars which are merely given for the purpose of information.

10-04-2026

| Patent document cited in search report | Publication date | Patent family member(s) | Publication date |
|---|---|---|---|
| DE 102004061817 A1 | 06-07-2006 | DE 102004061817 A1 | 06-07-2006 |
| | | WO 2006066985 A1 | 29-06-2006 |

EPO FORM P0459

For more details about this annex : see Official Journal of the European Patent Office, No. 12/82

**REFERENCES CITED IN THE DESCRIPTION**

**Patent documents cited in the description**

- GB 2604906 B